# EUROPÄISCHE PATENTSCHRIFT

(11) **EP 2 072 334 B1**
(45) Veröffentlichungstag und Bekanntmachung des Hinweises auf die Patenterteilung: **12.12.2012**
(21) Anmeldenummer: 09004537.8
(22) Anmeldetag: 10.10.2007
(51) Int. Cl.: B60Q 5/00, B60R 13/00, G09F 13/00, B60R 21/215

(54) **Baugruppe zur beleuchteten Darstellung eines Logos**
Component for illuminated representation of a logo
Module destiné à l'affichage lumineux d'un logo

(30) Priorität: 12.10.2006 DE 102006048347; 02.03.2007 DE 102007010328
(43) Veröffentlichungstag der Anmeldung: 24.06.2009
(62) Teilanmeldung aus: 07019807.2
(73) Patentinhaber: TRW Automotive Safety Systems GmbH, 63743 Aschaffenburg (DE)
(72) Erfinder: Hirzmann, Guido, 63877 Sailauf (DE)
(74) Vertreter: Mehnert, Bernhard

(56) Entgegenhaltungen:
- EP-A- 1 657 125
- DE-U1- 20 215 170
- DE-U1-202005 010 582
- GB-A- 2 383 181
- JP-A- 2000 118 320

## Beschreibung

Die Erfindung betrifft eine Baugruppe zur beleuchteten Darstellung eines Logos in einem Kraftfahrzeug.

Kraftfahrzeuge sind außen und innen üblicherweise mit Emblemen versehen, die das Logo des Herstellers darstellen. Hierzu ist das Logo entweder auf einem flächigen Emblem abgebildet, oder das Emblem selbst hat die Form des Logos oder wenigstens Strukturen, die das Logo darstellen.

Das Gefühl für die Wertigkeit eines Fahrzeuginnenraums kann durch die Beleuchtung eines darin angeordneten Logos angehoben werden. Aus dem Stand der Technik sind mehrere Lösungen zur Beleuchtung eines Logos bekannt, die auf unterschiedlichen Techniken beruhen. Beispielhaft seien die DE-U-200 18 732, EP-A-1 000 809, JP-A-2005 215596, US-B-6 190 026, US-A-2005/0007752, US-A-2006/0023468 und WO-A-2005/016698 genannt, sowie die EP 1 657 125 A1 und die GB-A-2 383 181.

Dokument EP 1 657 125 A1 offenbart dabei eine Baugruppe zur beleuchteten Darstellung eines Logos in einem Kraftfahrzeug mit einem Träger und wenigstens einer Lichtquelle, die hinter oder neben dem Träger angeordnet ist, wobei über dem Logo eine transparente Kunststoff-Umspritzung angeordnet ist, in die das Licht der Lichtquelle seitlich an einem Logo vorbei und/oder zwischen Logostrukturen hindurch eingekoppelt wird und wobei die transparente Kunststoff-Umspritzung lichtumlenkende Fasen aufweist.

Die Anbringung und Beleuchtung eines Logos auf einer Airbagabdeckung, typischerweise im zentralen Lenkradbereich, bereitet gewisse Schwierigkeiten. Bei einer Beleuchtungsbaugruppe ist zu berücksichtigen, daß sich im Falle einer Airbagauslösung weder einzelne Bauteile von der Baugruppe noch die gesamte Baugruppe von der Abdeckung lösen dürfen.

Weitere Anforderungen an eine Baugruppe zur Beleuchtung sind ein geringes Gewicht und eine geringe Bauhöhe. Außerdem ist es wünschenswert, daß bislang unbeleuchtete Embleme für einen beleuchteten Einsatz weiterhin verwendbar bleiben, so daß keine Änderungen am Design und Aufbau der Embleme erforderlich ist.

Gemäß der Erfindung umfaßt eine Baugruppe zur beleuchteten Darstellung eines Logos nach Patentanspruch 1.

Vorteilhafte und zweckmäßige Ausgestaltungen der erfindungsgemäßen Baugruppe sind in den Unteransprüchen angegeben.

Besondere Merkmale und Vorteile der Erfindung ergeben sich aus der nachfolgenden Beschreibung bevorzugter Ausführungsformen unter Bezugnahme auf die beigefügten Zeichnungen. In den Zeichnungen zeigen:
Figur 1 eine Explosionsansicht einer nicht-erfindungsgemäßen ersten Baugruppe;
Figur 2 den Lichtleiter der ersten Baugruppe;
Figur 3 den Träger der ersten Baugruppe;
Figur 4 die Leiterplatte der ersten Baugruppe;
Figur 5 den Boden der ersten Baugruppe;
Figur 6 die im Boden aufgenommene Leiterplatte der ersten Baugruppe;
Figur 7 eine perspektivische Schnittansicht der ersten Baugruppe;
Figuren 7a, 7b Detailansichten aus Figur 7;
Figur 7c eine geschnittene Detailansicht des Lichtaustrittsbereichs der ersten Baugruppe;
Figur 8 eine Explosionsansicht einer nicht-erfindungsgemäßen zweiten Baugruppe;
Figur 9 die zweite Baugruppe im zusammengebauten Zustand;
Figur 10 eine perspektivische Schnittansicht der zusammengebauten zweiten Baugruppe;
Figur 11 eine schematische Schnittansicht der zweiten Baugruppe;
Figur 12 eine Explosionsansicht einer erfindungsgemäßen dritten Baugruppe;
Figur 13 die dritte Baugruppe im zusammengebauten Zustand;
Figur 14 eine Schnittansicht der dritten Baugruppe;
Figur 15 eine schematische Schnittansicht der dritten Baugruppe;
Figur 16 die Umspritzung der dritten Baugruppe;
Figur 17 eine schematische Schnittansicht einer nicht-erfindungsgemäßen vierten Baugruppe;
Figur 18 eine schematische Schnittansicht einer nicht-erfindungsgemäßen fünften Baugruppe; und
Figur 19 eine schematische Schnittansicht einer nicht-erfindungsgemäßen sechsten Baugruppe.

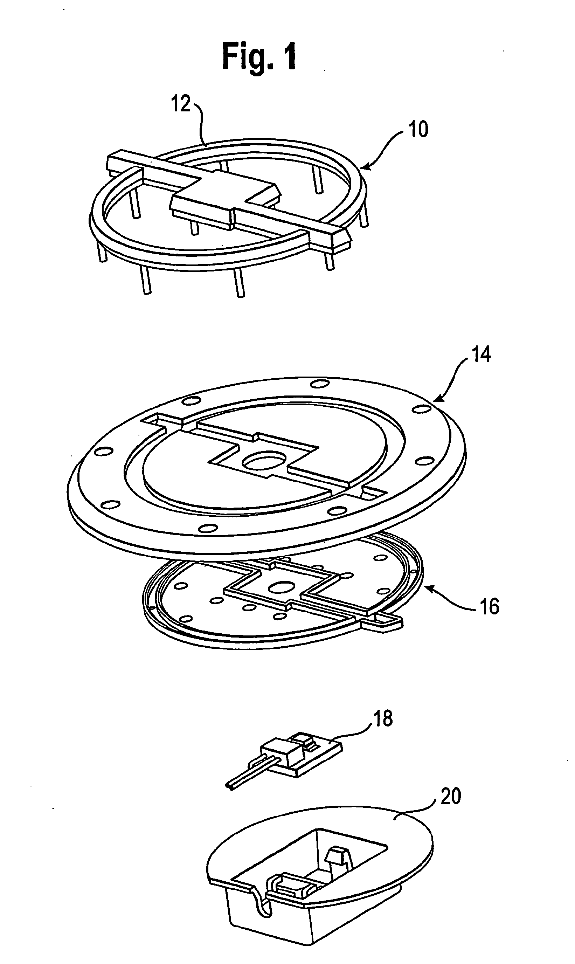

In den Figuren 1 bis 7 ist eine nicht-erfindungsgemäße erste Baugruppe dargestellt. Die Baugruppe umfaßt ein lichtundurchlässiges Emblem 10, das z. B. ein Logo 12 eines Automobilherstellers zeigt, einen lichtundurchlässigen Kunststoffträger 14, einen Lichtleiter 16, eine Leiterplatte 18 mit Elektronikbauteilen und einen Boden 20.

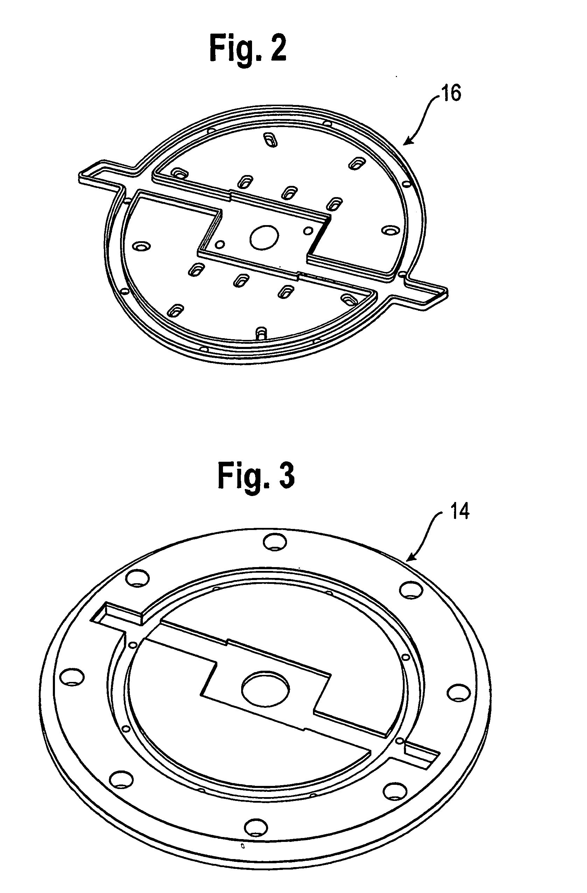

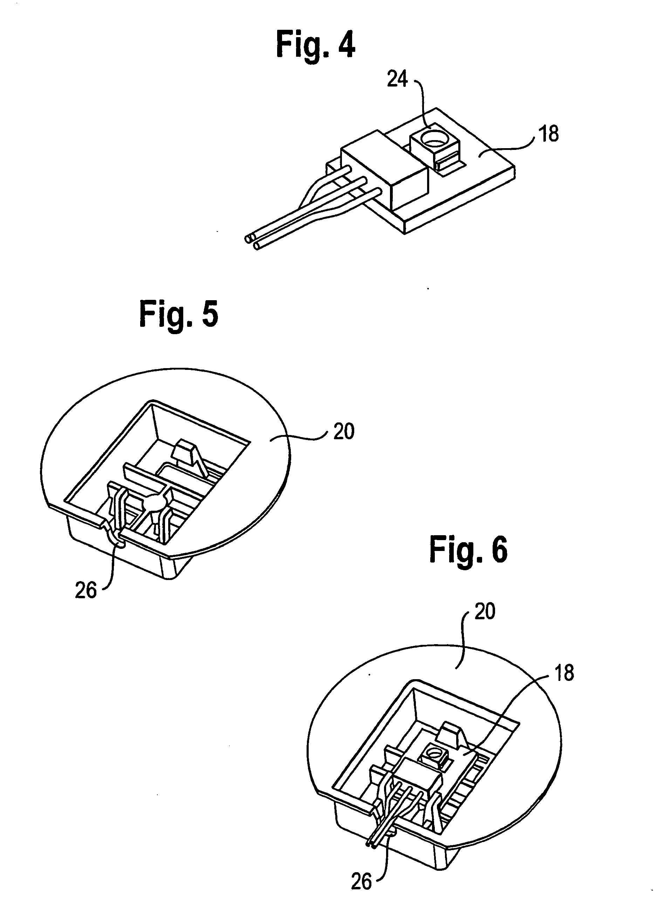

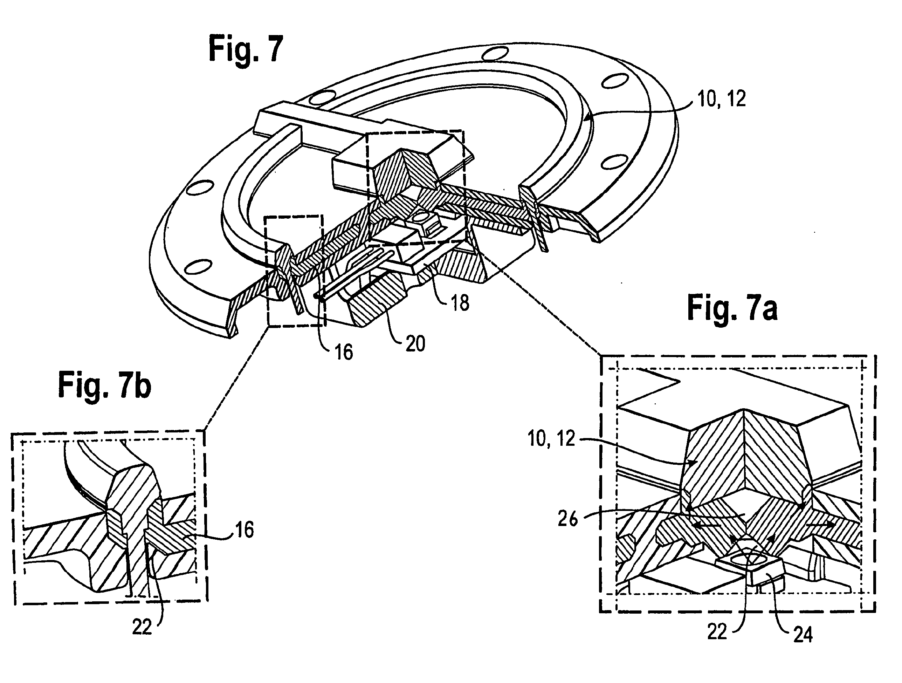

Das Emblem 10 ist ein dreidimensionales, reliefartiges massives Emblem und, ebenso wie bei den meisten der folgenden Ausführungsformen der Erfindung, im wesentlichen baugleich mit Emblemen, wie sie bislang unbeleuchtet verwendet wurden. Der in Figur 2 einzeln gezeigte Lichtleiter 16 ist ein auf die Form des Emblems 10 abgestimmtes Bauteil mit speziell angeordneten spiegelnd polierten Umlenkflächen 22 (siehe auch Detailansicht der Figur 7b). Der Lichtleiter 16 kann grundsätzlich auch aus einem anderen Material gebildet sein und ggf. eine reflektierende Beschichtung aufweisen. Der in Figur 3 einzeln gezeigte Kunststoffträger 14 für das Emblem 10 entsteht durch Umspritzen des Lichtleiters 16, vorzugsweise in einem Zweikomponentenspritzgußverfahren, wenn auch der Lichtleiter 16 ein Kunststoffteil ist. Auf der Leiterplatte 18 sind SMD-Bauteile (surface mounted devices) angeordnet (siehe Figur 4), insbesondere eine Leuchtdiode (LED) 24 als Lichtquelle. Für die Verkabelung der Leiterplatte 18 ist im Boden 20, der die Leiterplatte 18 aufnimmt und schützt, eine Aussparung 26 vorgesehen (siehe Figuren 5 und 6).

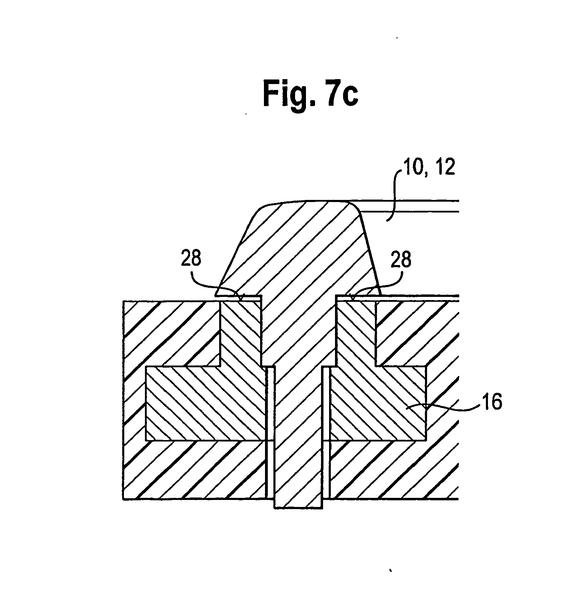

In Figur 7 ist die Baugruppe im zusammengebauten Zustand gezeigt. Die Leiterplatte 18 ist so angeordnet, daß die LED 24 zentral unter dem Emblem 10 und dem Lichtleiter 16 liegt. Die gleichmäßige Einkopplung des von der LED 24 ausgestrahlten Lichts in den Lichtleiter 16 wird durch einen als Diffusor wirkenden Kegel 26 des Lichtleiters 16 unterstützt, der direkt über der LED 24 angeordnet ist.

Wie aus Figur 7 und den Detailansichten der Figuren 7a und 7b hervorgeht, ist der Lichtleiter 16 so aufgebaut, daß das eingekoppelte Licht auf die Rückseite des Emblems 10 gerichtet wird. Dies wird durch die Umlenkflächen 22 ermöglicht, an denen das eingekoppelte Licht reflektiert wird. Der Lichtleiter 16 weist Lichtaustrittsflächen 28 auf, die den rückseitigen Randbereichen des Emblems 10 gegenüberliegen, diese aber seitlich nicht überragen (siehe Figur 7c). Da die Randbereiche des Emblems 10 nicht unmittelbar auf dem Lichtleiter 16 aufliegen, wird das Emblem 10 somit indirekt rückseitig beleuchtet. Es entsteht dabei ein Beleuchtungseffekt, der vergleichbar ist mit einer Corona.

Die Baugruppe wird - wie bislang das unbeleuchtete Emblem - mittels der Stifte des Emblems 10 an der Airbagabdeckung des Lenkrads befestigt. Dazu werden die Stifte nach dem Einsetzen in entsprechende Öffnungen der Airbagabdeckung auf deren Rückseite verschweißt, z. B. durch Ultraschallschweißen.

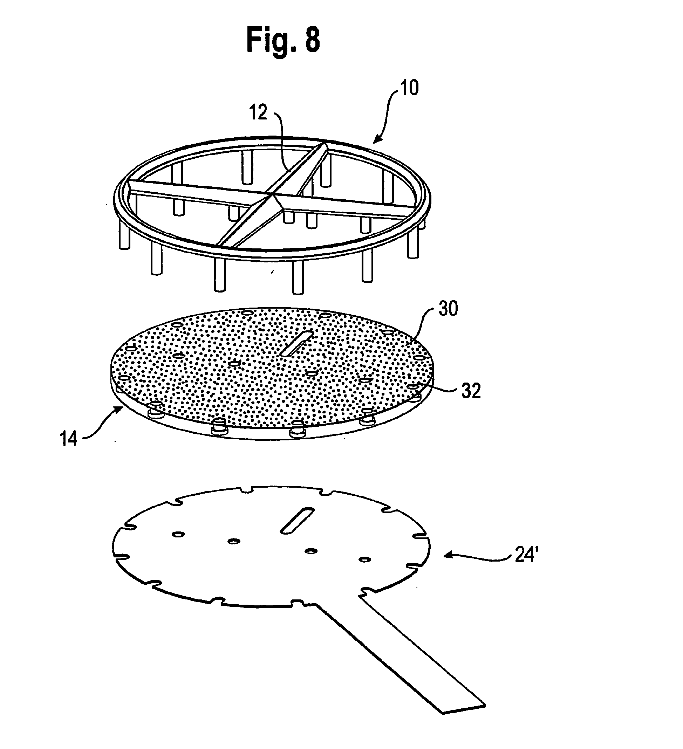

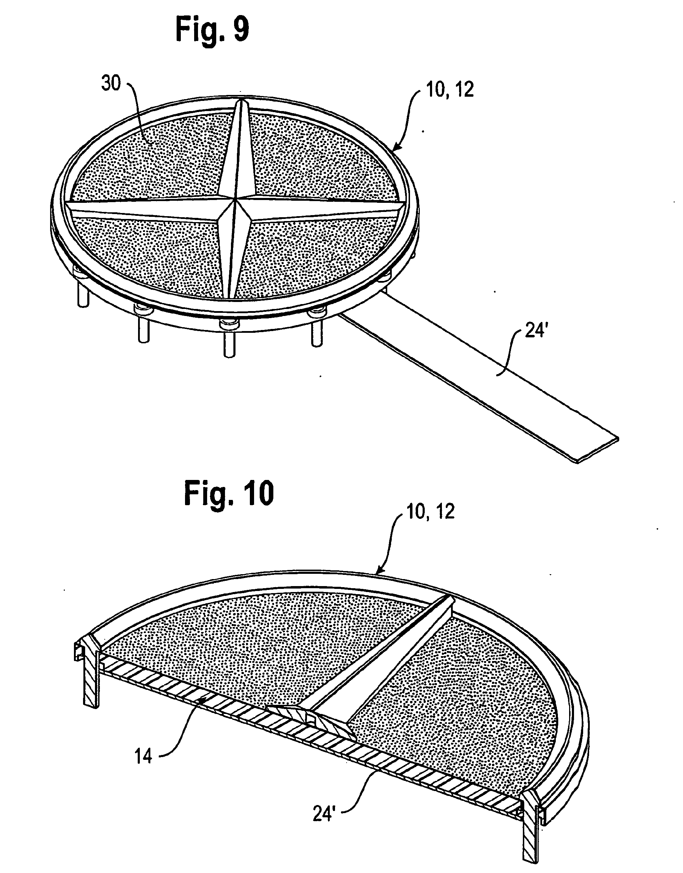

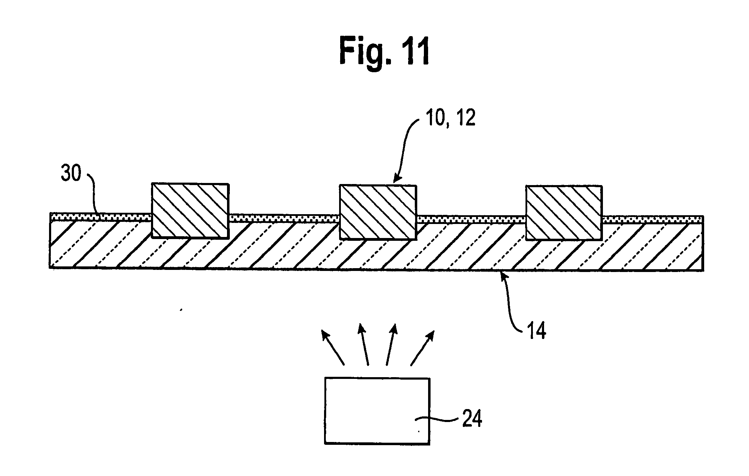

In den Figuren 8 bis 11 ist eine nicht-erfindungsgemäße zweite Baugruppe dargestellt. Die Baugruppe umfaßt ein dreidimensionales, reliefartiges massives Emblem 10, eine Elektrolumineszenzfolie 24' als Lichtquelle und einen transparenten Kunststoffträger 14. Die Verwendung von Elektrolumineszenzfolien zur Beleuchtung von Emblemen ist an sich bekannt (siehe z. B. DE-U-298 20 304), weshalb auf den Schichtaufbau und die elektrische Anregung der Folie 24' nicht weiter eingegangen wird. Die Folie 24' und der Träger 14 sind hinsichtlich Form, Befestigungsbohrungen etc. auf das Emblem 10 abgestimmt.

Die dem Emblem 10 zugewandte Oberfläche des Trägers 14 ist mit einem an sich lichtundurchlässigen Lack 30 beschichtet. Die Lackschicht weist aber Durchbrüche 32 auf, so daß an diesen Stellen Licht durch den Träger 14 hindurchtreten kann. Die Durchbrüche 32 können nach der Beschichtung des Trägers 14 mit Hilfe eines Lasers erzeugt werden. Es sind grundsätzlich beliebige Strukturen herstellbar, z. B. feine Wabenstrukturen für eine gleichmäßige Ausleuchtung oder größere Durchbrüche 32 für eine gezielte Ausleuchtung eines bestimmten Bereichs.

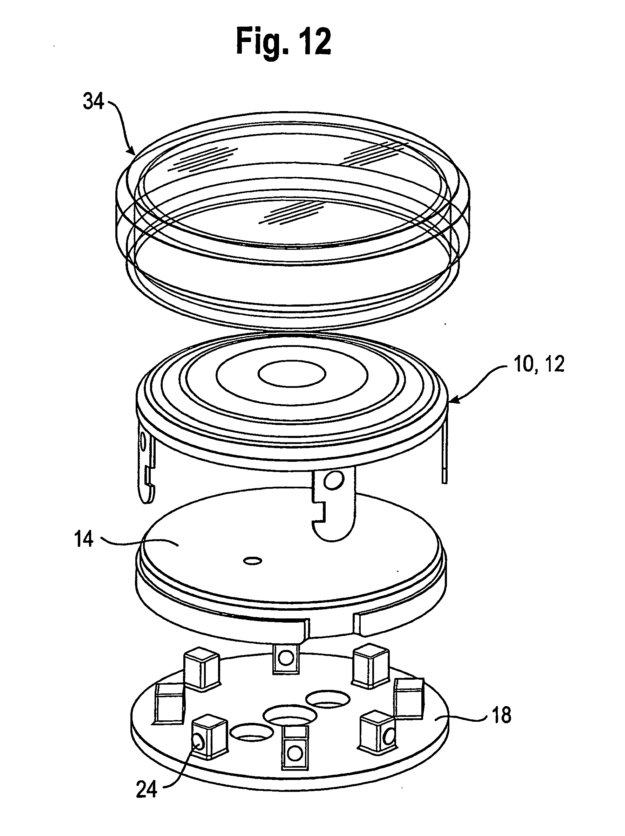

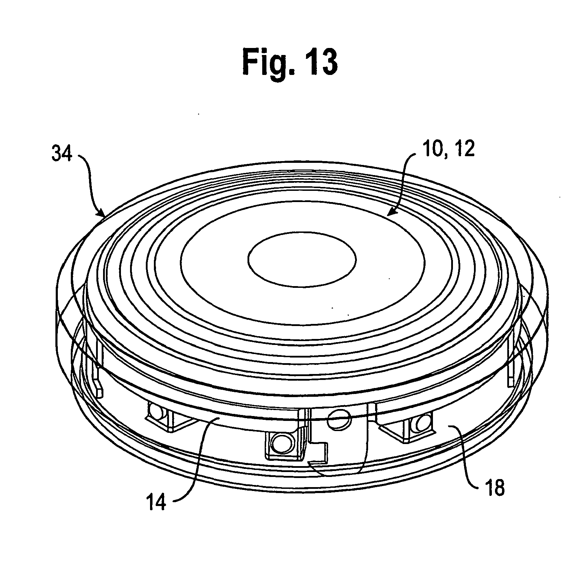

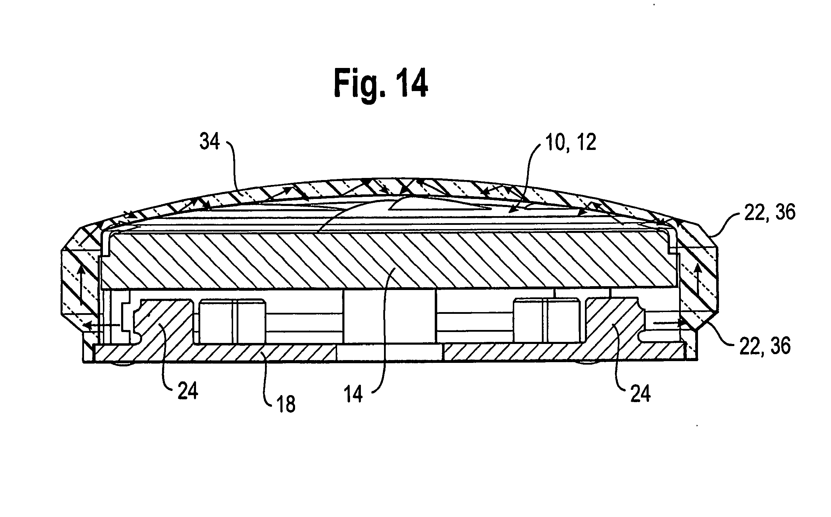

Eine erfindungsgemäße dritte Baugruppe ist in den Figuren 12 bis 16 dargestellt. Die in Figur 12 in Explosionsansicht und in den Figuren 13 und 14 im zusammengebauten Zustand gezeigte Baugruppe umfaßt eine u. a. mit LEDs 24 bestückte lichtundurchlässige Leiterplatte 18, einen lichtundurchlässigen Träger 14, ein lichtundurchlässiges Emblem 10 und eine transparente Kunststoff-Umspritzung 34 über dem Emblem 10.

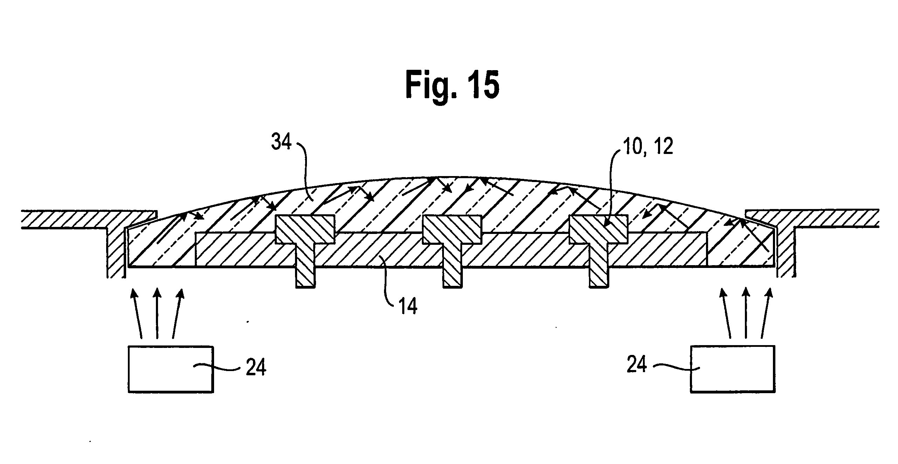

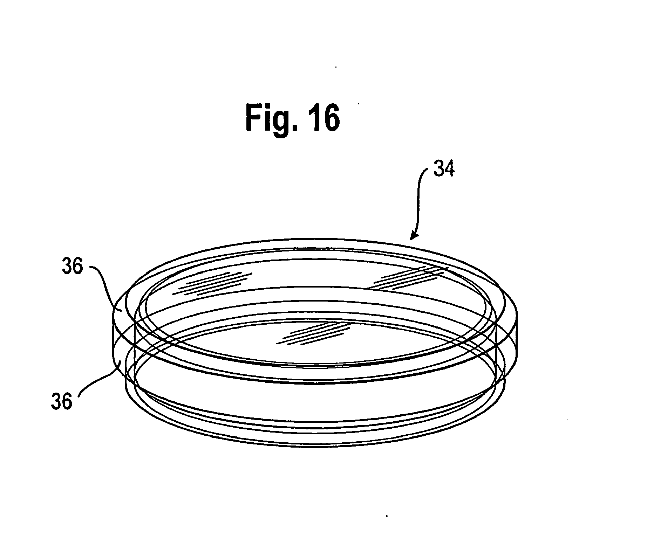

Diese Baugruppe zeichnet sich dadurch aus, daß das Licht der LEDs 24 durch geeignet angeordnete Umlenkflächen 22 seitlich am Träger 14 und am Emblem 10 vorbei in die transparente Umspritzung 34 eingekoppelt wird, wie in den Figuren 14 und 15 gezeigt. In der Umspritzung 34 erfolgt eine Umlenkung an deren Fasen 36 (siehe Figur 16). Das (zumindest teilweise) an der inneren Oberfläche der Umspritzung 34 reflektierte Licht beleuchtet dann das Emblem 10.

Bei einem nicht vollflächigen Emblem 10 kann das Licht (zusätzlich) auch zwischen den Emblemstrukturen hindurch in die transparente Umspritzung 34 eingekoppelt werden. In diesem Fall sind im Träger 14 entsprechende Durchbrüche vorgesehen.

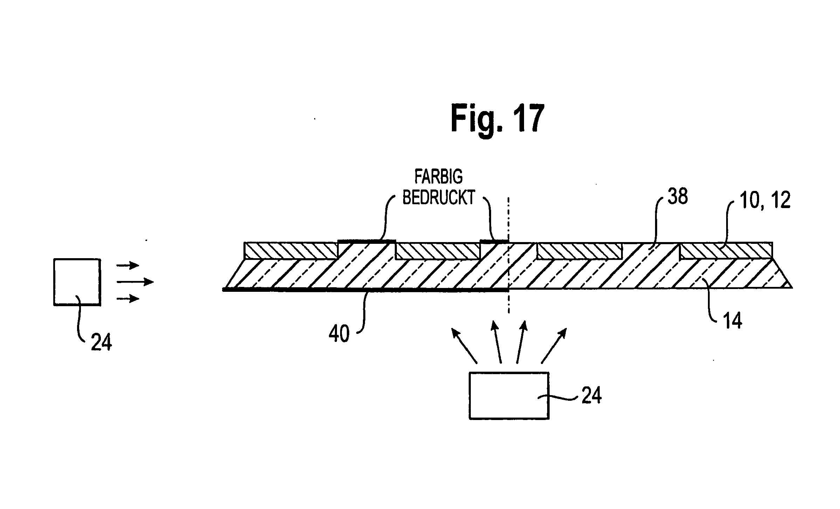

Ein weiteres Beleuchtungskonzept mit einer nicht-erfindungsgemäßen vierten Baugruppe ist in Figur 17 gezeigt. Die Baugruppe umfaßt hier einen transparenten Träger 14, der von einer Seite von einer oder mehreren LEDs 24 beleuchtet wird. Die andere Seite des Trägers 14 ist entsprechend dem aufliegenden lichtundurchlässigen Emblem 10 strukturiert. Das Licht kann somit nur durch die erhöhten Strukturen 38 der Trägeroberfläche austreten. (Es ist nicht zwingend erforderlich, daß die Strukturen 38 erhöht sind.)

Wie in der linken Hälfte der Figur 17 angedeutet, kann das Licht auch von der Seite in den transparenten Träger 14 eingekoppelt werden. Die nicht sichtbare Oberfläche des Trägers 14 kann mit einer Reflexionsfolie 40 oder einem reflektierenden Lack beschichtet sein. Die erhöhten Strukturen 38 der sichtbaren Oberfläche können bedruckt sein, um einen bestimmten Beleuchtungseffekt zu erzielen.

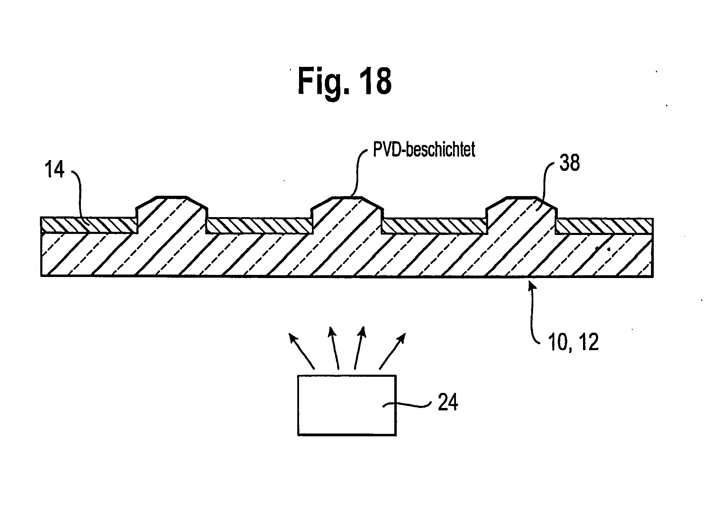

Das in Figur 18 dargestellte Beleuchtungskonzept mit einer nicht-erfindungsgemäßen fünften Baugruppe ist dem zuvor beschriebenen ähnlich, wobei hier Träger und Emblem vertauscht sind, d. h. der Träger 14 ist auf der dem Betrachter zugewandten Seite angeordnet, und das Emblem 10 hat erhöhte Strukturen 38. Dementsprechend ist hier das Emblem 10 transparent und der Träger 14 lichtundurchlässig. Die erhöhten Strukturen 38 des Emblems 10 sind PVD-beschichtet nach Art eines venezianischen Spiegels. Das Licht der LED(s) 24 tritt von der dem Betrachter abgewandten Seite in das Emblem 10 und kann durch die erhöhten Strukturen 38 austreten. Umgekehrt kann aber der Betrachter nicht durch die PVD-Beschichtung hindurchsehen.

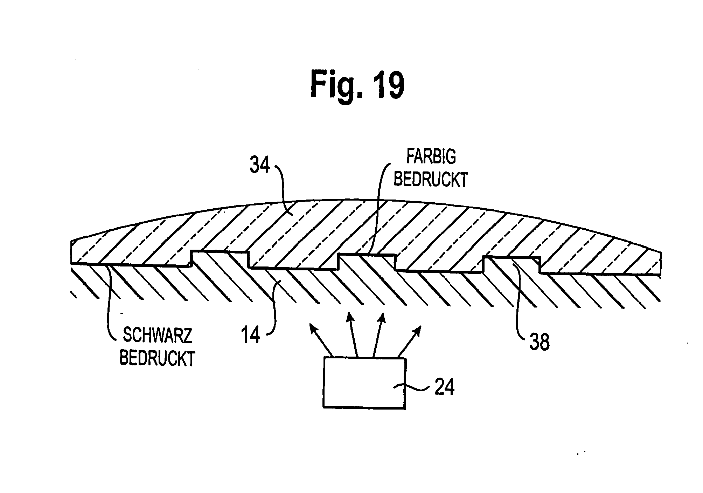

Ein letztes Beleuchtungskonzept mit einer nicht-erfindungsgemäßen sechsten Baugruppe ist in Figur 19 dargestellt. Ein transparenter Träger 14 weist erhöhte Strukturen 38 auf, die dem positiven oder negativen Logo 12 entsprechen, das beleuchtet dargestellt werden soll. Der Träger 14 ist mit einem transparenten Kunststoff 34 umspritzt, so daß die Logostruktur geschützt ist. Das Licht einer oder mehrerer LEDs 24 wird von der anderen Seite in den Träger 14 eingekoppelt. Der Träger 14 ist auf der dem Betrachter zugewandten Seite mit Ausnahme der erhöhten Strukturen 38 schwarz bedruckt, so daß dort kein Licht austreten kann. Die erhöhten Strukturen 38 sind dagegen farbig bedruckt und lichtdurchlässig, so daß das Logo 12 farbig beleuchtet erscheint.

Die beispielhaft beschriebenen Ausführungsformen zeigen eine Reihe von Maßnahmen zur beleuchteten Darstellung eines Logos 12, die auch untereinander kombinierbar sind.

## Patentansprüche

1. Baugruppe zur beleuchteten Darstellung eines Logos in einem Kraftfahrzeug, mit einem Logo (10, 12), einem Träger (14) und wenigstens einer Lichtquelle (24), die hinter oder neben dem Träger (14) angeordnet ist, wobei über dem Logo (10, 12) eine transparente Kunststoff-Umspritzung (34) angeordnet ist, in die das Licht der wenigsten einen Lichtquelle (24) seitlich an dem Logo (10, 12) vorbei und/oder zwischen den Enblemstrukturen (10, 12) hindurch eingekoppelt wird und wobei die transparente Kunststoff-Umspritzung lichtumlenkende Fasen (36) aufweist, wobei das Licht der wenigstens einen Lichtquelle (24) durch Umlenkflächen (22) seitlich am Träger (14) und am Logo (10, 12) vorbei in die transparente Umspritzung (34) eingekoppelt wird, und in der Umspritzung (34) eine Umlenkung an deren Fasen (36) erfolgt, so dass das Logo (10, 12) durch dass zumindest teilweise an der inneren Oberfläche der Umspritzung (34) reflektierte Licht beleuchtet wird.

2. Baugruppe nach Anspruch 1, mit einem das Logo (12) darstellenden Emblem (10).

3. Baugruppe nach Anspruch 2, **dadurch gekennzeichnet, dass** das Emblem (10) lichtundurchlässig ist.

4. Baugruppe nach einem der vorhergehenden Ansprüche, **dadurch gekennzeichnet, dass** ein sichtbares transparentes Teil der Baugruppe wenigstens teilweise nach einem Verfahren der physikalischen Gasabscheidung (PVD) beschichtet ist.

5. Airbagabdeckung in einem Kraftfahrzeug mit einer Baugruppe nach einem der vorhergehenden Ansprüche.

## Claims

1. A component for illuminated representation of a logo in an automotive vehicle, comprising a logo (10, 12), a carrier (14) and at least one light source (24) disposed behind or adjacent to the carrier (14), wherein above the logo (10, 12) a transparent plastic extrusion coating (34) is arranged into which the light of the at least one light source (24) is coupled laterally past the logo (10, 12) and/or between the emblem structures (10, 12), and wherein the transparent plastic extrusion coating includes light deflecting bevels (36), the light of the at least one light source (24) being coupled into the transparent extrusion coating (34) laterally past the carrier (14) and the logo (10, 12) by deflecting areas (22), and in the extrusion coating (34) a deflection is performed at the bevels (36) thereof so that the logo (10, 12) is illuminated by the light reflected at least partly by the internal surface of the extrusion coating (34).

2. The component according to claim 1, comprising an emblem (10) representing the logo (12).

3. The component according to claim 2, **characterized in that** the emblem (10) is opaque.

4. The component according to any one of the preceding claims, **characterized in that** a visible transparent part of the component is coated at least partly according to a process of physical vapor deposition (PVD).

5. An airbag cover in an automotive vehicle comprising a component according to any one of the preceding claims.

## Revendications

1. Ensemble destiné à l'éclairage d'un logo (12) pour un véhicule automobile, comportant un logo (10,12), un support (14) et au moins une source de lumière (24) qui est disposée derrière ou à côté du support (14), où se trouve au-dessus du logo (10, 12) une pièce injectée en plastique transparent (34), dans laquelle la lumière d'au moins une source de lumière (24) passée latéralement sur le logo (10, 12) et/ou entre la structure de l'emblème (10, 12) se rejoint et où la pièce injectée en plastique transparent présente des zones réflectrices de lumière (38), où la lumière d'au moins une source de lumière (24) passée au travers de surfaces de déviation (22) latéralement au support (14) et au logo (10, 12) se rejoint dans la partie injectée transparente (34), et que la partie injectée (34) présente une déviation par les chanfreins (36), de sorte que le logo (10, 12) sera éclairé par au moins une partie de la lumière réfléchie à l'intérieur de la surface de la partie injectée (34).

2. Ensemble selon la revendication 1, comprenant un logo (12) représentant un emblème (10).

3. Ensemble selon la revendication 2, **caractérisé en ce que** l'emblème (10) laisse passer la lumière.

4. Ensemble selon l'une quelconque des revendications précédentes, **caractérisé en ce qu'**un élément transparent visible de l'assemblage est au moins partiellement revêtu par un procédé de dépôt physique en phase vapeur (PVD)

5. Couvercle d'airbag de véhicule automobile comprenant un ensemble selon l'une quelconque des revendications précédentes.
